# EUROPEAN PATENT APPLICATION

(11) **EP 0 537 925 A1**
(43) Date of publication of application: **21.04.1993**
(21) Application number: 92309029.4
(22) Date of filing: 02.10.1992
(51) Int. Cl.: G06F 12/14, G06F 1/00

(54) **File-secure computer system**

(30) Priority: 15.10.1991 IL 99747
(71) Applicant: NEWS DATACOM LTD., Maidenhead, Berks SL6 7B2 (GB)
(72) Inventor: Bar-On, Michel Gershon, Mobile Post Mizrach Binyamin, 90967 (IL)
(74) Representative: Godsill, John Kenneth

(57) **Abstract**

A method for the secure storage and retrieval of data including the steps of placing a removable user access unit into a security access port operatively associated with a computer, generating a first string of symbols, generating a second string of symbols in the user access unit based on the first string of symbols, encrypting the data based on the second string of symbols to form an encrypted data block and storing the encrypted data block in a non-volatile memory. The method also includes, during data retrieval the steps of retrieving the stored encrypted data from the non-volatile memory, regenerating the first string of symbols, regenerating the second string of symbols in the user access unit and decrypting the encrypted data based the second string of symbols to form decrypted data.

## Description

### FIELD OF THE INVENTION

This invention relates to computer systems and more particularly to security systems for computers.

### BACKGROUND OF THE INVENTION

For large computer systems with many users a number of methods have been developed for protecting the system from invasion by unauthorized users and for protecting data transmitted by remote users from interception. For smaller PC systems generally only access control systems are available.

U.S. Patent 3,764,742 describes a cryptographic credit card device which is inserted by a remote user of a central computer system into a reader when he wishes to log-on to the system. The credit card device is operative to generate an encrypt key when primed with a string of priming characters. The central computer has the algorithms used by all of the authorized users to generate their encrypt keys in its memory. In operation the user logs-on at the terminal by typing in a short string. The computer checks this log-on string with a listing in the central computer. If there is a match, the computer generates random priming characters which it sends to the remote terminal. Logic in the card generates an encrypt key based on the random priming characters. The operator enters a personal ID which the terminal encrypts with the encrypt key and sends to the central computer. The central computer utilizing the same algorithm as the card, decodes the encryption and compares the result with the proper ID. If the operator entered the correct ID, the operator can communicate with the central computer. In a secure communication mode, the central computer periodically generates a set of priming characters which are used by the terminal for encryption and by the central computer for decryption. The data is apparently stored in the central computer memory in "clear" form.

Other U.S. Patents which provide for remote user identification and/or encryption of transmitted messages are U.S. Patents 3,806,874; 4,599,489; 4,951,249; 4,800,590; 4,819,267 and 4,691,355.

U.S. Patent 4,588,991 describes a system in which data is stored in encrypted form on the storage medium of the central computer. This patent describes a system for enhancing security of the data by changing the encryption key when the system is accessed.

Other well known systems utilize an electronic or mechanical key system to gain access to personal or one-user systems. However, to protect computers from data theft, users must use detachable units such as diskettes or Bernoulli disks, and store the units in a safe place after work hours.

### SUMMARY OF THE INVENTION

The object of the present invention is to provide a computer system in which security is not dependent solely on access to or the physical security of the stored data. Unlike previous systems which depend on limiting access to the computer or on encrypting information using codes which are also physically available in the computer and/or to persons other than the user, the system of the present invention protects the data by storing the data in encrypted form using an encryption key which is present only in a removable user access unit in the sole possession of the user.

Thus a number of users can have access to the same data files but only the user who actually entered the information in the file can read the file.

In a preferred optional embodiment of the system the allocation files of the system are also encrypted using the card and access to the system is thus limited to holders of the user access unit or a clone of the user access unit.

The system can be used as a stand alone protection system or is preferably used in conjunction with other available user access identification/restriction systems. Thus the user access unit can have additional terminals which supply user identification information which are required for access to the system and which may be used by users having different user access units.

There is therefore provided, in a preferred embodiment of the invention, a method for the secure storage and retrieval of data including the steps of, placing a removable user access unit into a security access port operatively associated with a computer, generating a first string of symbols in the computer, generating a second string of symbols in the user access unit based on the first string of symbols, encrypting the data based the second string of symbols to form an encrypted data block and storing the encrypted data block in a non-volatile memory.

In a preferred embodiment of the invention the first string of symbols is generated in the computer. In an alternative preferred embodiment of the invention the first string of symbols is generated in the user access unit.

In a preferred embodiment of the invention the method includes the step of storing the first string of symbols together with the data block in the non-volatile memory.

Preferably the step of generating the first string of symbols includes the step of generating a random string of symbols. In an alternative preferred embodiment of the invention the step of generating the first string of symbols includes determining the address at which the encrypted data is to be stored. Generally, when the first string of symbols is based on the address, the first string of symbols need not be stored with the data block.

Preferably the step of generating the second string of symbols from the first string utilizes a one-way hashing function.

In a preferred embodiment of the invention the method also includes the steps of retrieving the stored encrypted data from the non-volatile memory, transmitting the first string of symbols to the user access unit, regenerating the second string of symbols in the user access unit and decrypting the encrypted data based on the second string of symbols to form decrypted data.

There is further provided, in accordance with a preferred embodiment of the invention, apparatus for secure storage of data including a terminal, a security access port operatively associated with the terminal adapted to receive a user access unit, seed generating means for generating a first string of symbols, control word generating means for generating a second string of symbols in the user access unit based on the first string of symbols, encrypting means for encrypting the data based on the second string of symbols to form an encrypted data block, a non-volatile memory and storage means for storing the encrypted data block in the non-volatile memory.

In a preferred embodiment of the invention, scrambling words based on the second string of symbols are utilized to form the encrypted data block and for decrypting the encrypted data.

In a preferred embodiment of the invention the seed generating means includes means for deriving the first string of symbols from the address of the encrypted data block in the non-volatile memory. In an alternative preferred embodiment the seed generating means includes an essentially random symbol generator, wherein the first string of symbols is derived from the output of the essentially random symbol generator.

Preferably, the apparatus for secure storage includes means for storing the first string of symbols together with the encrypted data. Generally, when the first string of symbols is based on the address, the first string of symbols need not be stored with the data block.

In a preferred embodiment of the invention the apparatus for secure storage includes retrieving means for retrieving the stored encrypted data from the non-volatile memory, regenerating means for re-generating the first string of symbols, means for applying the first string of symbols to the word generating means and for receiving therefrom a regenerated second string of symbols, and decrypting means for decrypting the encrypted data based on the second string of symbols to form decrypted data.

There is further provided, in accordance with a preferred embodiment of the invention a computer system including a terminal, a security access port operatively associated with the terminal adapted to receive a user access unit, a non-volatile memory containing stored encrypted data, means for retrieving the stored encrypted data from the non-volatile memory, seed generating means for generating a first string of symbols, control word generating means for generating a second string of symbols in the user access unit based on the first string of symbols, decrypting means for decrypting the encrypted data based on the second string of symbols to form decrypted data.

In one preferred embodiment of the invention the allocation table is encrypted by the encryption method of the invention, in an alternate preferred embodiment of the invention only the data is encrypted and the allocation table is not encrypted by the system of the invention. In this alternative embodiment the system preferably includes conventional access controls or conventional encryption for the allocation table.

In a preferred embodiment of the invention the decrypting means includes means for generating scrambling words based on the second string of symbols and means for decrypting the encrypted data with the scrambling words to form the decrypted data. Preferably the means for generating includes a pseudo-random binary number generator.

### BRIEF DESCRIPTION OF THE DRAWINGS

The invention can be better understood by the following, non-limiting, detailed description of the preferred embodiments of the invention described in conjunction with the accompanying drawings in which:
Fig. 1 is a block diagram of a computer system in accordance with a preferred embodiment of the invention;
Fig. 2 is a block diagram of a preferred embodiment of the data filter of the apparatus of Fig. 1;
Fig. 3 is a block diagram of a preferred embodiment of the seed generator of the apparatus of Fig. 2 using a random seed;
Fig. 4 is a block diagram of an alternate preferred embodiment of the seed generator of the apparatus of Fig. 2 using the data address as the seed;
Fig. 5 is a block diagram of a preferred embodiment of the pseudo-random binary number generator of the apparatus of Fig. 2;
Fig. 6 is a block diagram of a preferred embodiment of the scrambler/descrambler module of the apparatus of Fig 2; and
Fig. 7 is a block diagram of a removable user access unit in accordance with a preferred embodiment of the invention.

### DETAILED DESCRIPTION OF THE PREFERRED EMBODIMENTS

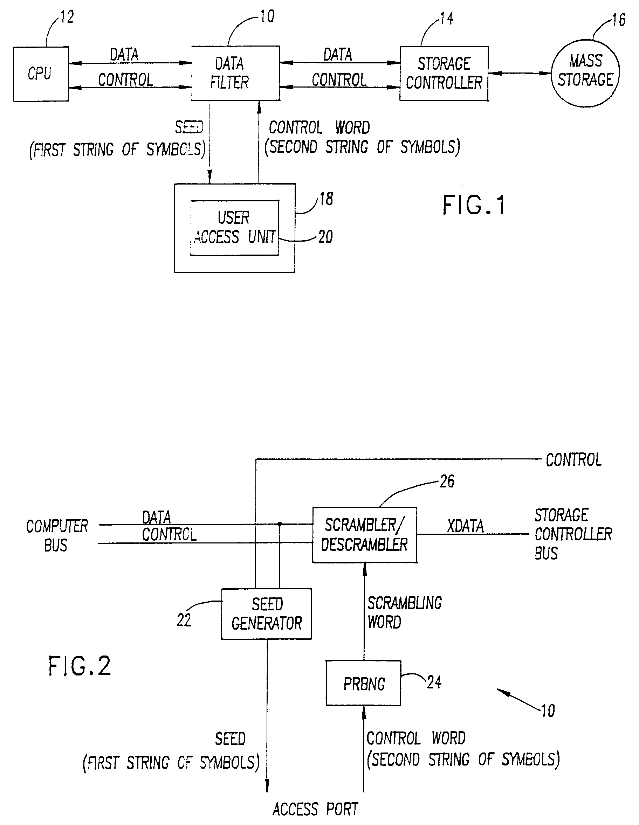

Fig. 1 shows a general block diagram of a file-secure computer system according to the invention. The system contains a data filter 10 which receives both data and control signals from a CPU 12 and from a storage controller 14. Data filter 10 is operative to pass control signal unchanged and to change unencrypted data received from CPU 12 into encrypted data for transfer to storage controller 14. Data filter 10 is also operative to change encrypted data received from storage controller 14 into decrypted data for transfer to CPU 12.

Storage controller 14 is operative to store the encrypted data on non-volatile mass storage device 16 which can be a disk drive or any other mass-storage device known in the art.

In a preferred embodiment of the invention storage controller 14 and mass storage 16 are part of the same computer as CPU 12 and data filter 10. In an alternative preferred embodiment of the invention, storage controller 14 and mass storage 16 are part of a remote central computer and are connected to data filter 10 by remote transmission lines as is well known in the art.

A security access port 18 has a removable user access unit 20 inserted therein by the user. Port 18 receives a seed, whose generation is described below, from data filter 10 and user access unit 20 generates a control word, by means which will be described more fully below, which is transmitted to the data filter for use in the encoding process.

A preferred embodiment of data filter 10 is shown in Fig. 2. In an encryption mode, data and control information are received by data filter 10 from the computer bus. A seed generator 22 generates a seed, which is fed to access port 18 and a Pseudo-Random Binary Random Number Generator (PRBNG) 24 receives therefrom a control word from which PRBNG 24 generates a scrambling word. The scrambling word is used by a scrambler/descrambler 26 to encrypt the incoming data and send it on to storage controller 14 for storage in mass storage 16.

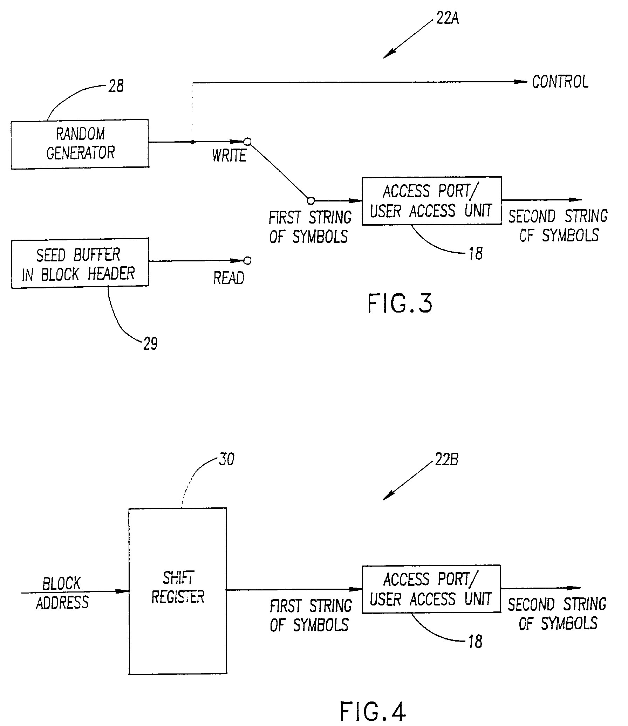

In a decryption mode, encrypted data and control information are received from storage controller 14 for decryption and passage to the computer bus. In the decryption mode the seed is not generated independently by the seed generator, but is based on information received from the storage controller. In one embodiment of the invention, described more fully in conjunction with Fig. 3, the encryption seed is a random number and is stored with the data in a seed buffer in the block header. When the data is read, the contents of this buffer are read and sent directly to the user access unit. In an alternative preferred embodiment of the invention, described more fully in conjunction with Fig. 4, the seed is the address of the data in mass storage. In this embodiment address data is supplied to the user access unit in both encryption and decryption modes.

Fig. 3 shows a block diagram of a preferred embodiment of seed generator 22, designated by reference numeral 22A, utilizing a random number. In the encryption (write) mode access port 18 receives a random number, which acts as the seed, from random number generator 28. In order to allow for the subsequent decryption of the stored data, this number is stored in the seed buffer of the block header 29 of the data. The seed is preferably changed for each block of data. In the decryption (read) mode the seed is read from the seed buffer in the block header 29.

Fig. 4 shows an alternate preferred embodiment of seed generator 22, designated by reference numeral 22B, in which the seed is directly generated from the address of the data. During both encryption and decryption, controller 14 passes this information to shift register 30 which generates the seed.

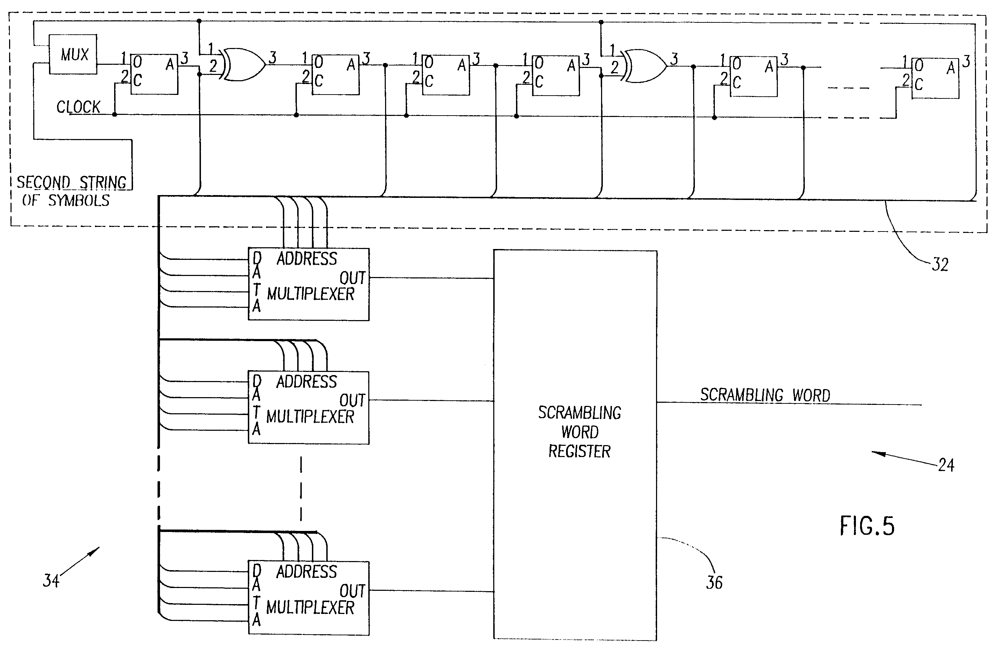

Fig. 5 shows a block diagram of a preferred embodiment of Pseudo-Random Binary Number Generator 24. PRBNG 24 converts the control word received from the access port into a series of scrambling words. These scrambling words which are in binary form are used by scrambler/descrambler 26 to scramble or descramble the data. The PRBNG is based on a shift register 32, some of whose cell entries are exclusive-ored with the register's output. This device produces an apparent random series of bits, with a very long cycle. The cells of the register are used as address and data of an array of multiplexers 34 whose outputs are combined in a scrambling word register 36 to form a scrambling word. More detailed information on Pseudo-Random Binary Number Generators can be found in the article entitled "Pseudorandom Bit Generators in Stream-Cipher Cryptography" in IEEE COMPUTER, February 1991 p. 8 ff., the contents of which are included herein by reference. In that article the functioning of the PRBNG is described as "A feedback shift register consists of n flip-flops, and a feedback function that expresses each new element a(t), when t>n, of the sequence in terms of the previously generated elements a(t-n), a(t-n+1), ..., a(t-1)." The design using a shift register and only XOR gates is one of many possible designs. The period of the sequence produced by the PRBNG can be as large as 2ⁿ.

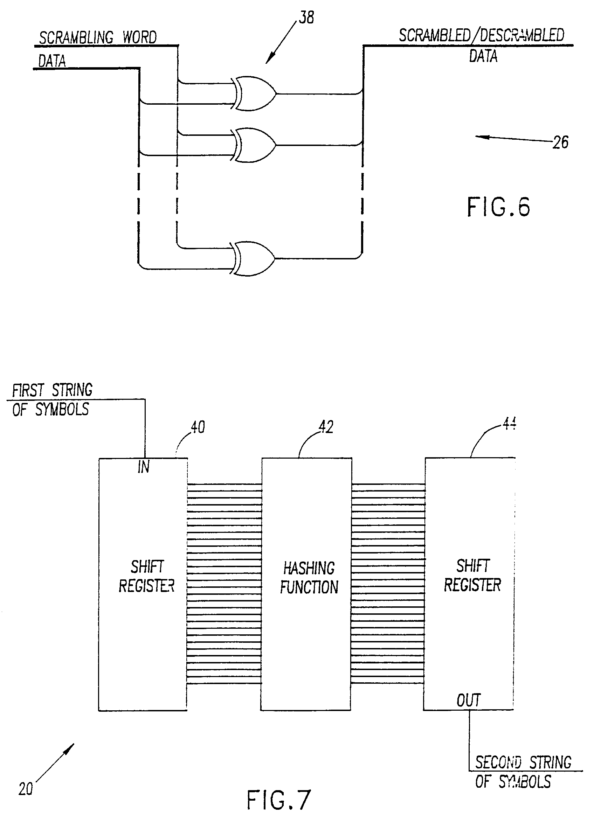

Referring now to Fig. 6 the scrambling word is exclusive-ored with the encrypted/unencrypted data, in scrambler/descrambler 26, by exclusive-or gates 38 to form decrypted/encrypted data as the case may be.

It is thus seen that, so long as the algorithm used by user access unit 20 to generate the control word is not known, the encrypted data is safe from reading or deliberate modification. While the data can be tampered with, any such tampering will be destructive, since the changes will not be encrypted according to the same scrambling word as the rest of the data. In order to avoid any such destruction of data, suitable access controls as are known in the art are preferably used as an adjunct to the system of the present invention. Alternatively or additionally, the allocation table can be encrypted using the same system as the data. In such a system access to the disk as a whole will be denied to any user who does not have the user access unit.

Figure 7 shows a block diagram of a preferred embodiment of user access unit 20. The unit comprises a shift register 40 which receives the seed and passes it on to hashing function operator 42, which subjects the seed to a one-way hashing function whose parameters are set by the user and buried in the hashing function operator in such a way that it is not possible to read them back. The resulting hashed seed is passed to a shift register 44 for transfer to the filter.

Also included in user access unit 20, but not shown in Fig. 7 are a one time initializing mechanism for entering user parameters and a protection mechanism, which prevents the reading or modification of the parameters. The hashing function operator may use programmable logic device technology or any other suitable technology.

In an alternative preferred embodiment of the invention either or both of random noise generator 28 and PRBNG 24 are included as part of user access unit 20 rather than as part of the computer.

No one except the user knows the parameters of the hashing function. Nor does the user have to remember the parameters, since they are contained in the user access unit. An unauthorized user of the system will not have physical access to the user access unit and therefore cannot generate the proper control words required to read the encrypted files.

Unlike existing systems in which the algorithm used by the user for encoding is contained in the central computer, the present system has all the user specific information in removable user access unit 20. Thus even if the data itself is compromised by a physical or electronic break-in of the computer, the encrypted data will be safe from reading or modification.

The present invention is not limited by the particular embodiments disclosed but includes various changes and modifications which may be made without departing from the spirit and scope of the invention as defined in the following claims:

## Claims

1. A method for the secure storage and retrieval of data including the steps of:
placing a removable user access unit into a security access port operatively associated with the computer;
generating a first string of symbols;
generating a second string of symbols in the user access unit based on the first string of symbols;
encrypting the data based on the second string of symbols to form an encrypted data block; and
storing the encrypted data block in a non-volatile memory.

2. A method according to claim 1 wherein the first string of symbols is generated in the computer and transmitted to the user access unit.

3. A method according to claim 1 wherein the first string of symbols is generated in the user access unit.

4. A method according to any of the preceding claims and including the step of storing the first string of symbols together with the data block in the non-volatile memory.

5. A method according to any of the preceding claims wherein the step of generating the first string of symbols includes the step of generating a random string of symbols.

6. A method according to claim 1 wherein the step of generating the first string of symbols includes determining the address at which the encrypted data is stored.

7. A method according to any of the preceding claims wherein the step of generating the second string of symbols from the first string includes utilizing a one-way hashing function.

8. A method according to any of the preceding claims wherein the step of encrypting the data includes the step of generating a string of words from the second string of symbols and encrypting the data with the second string of words.

9. A method according to any of the preceding claims and including the steps of:
retrieving the stored encrypted data from the non-volatile memory;
regenerating the first string of symbols;
regenerating the second string of symbols in the user access unit; and
decrypting the encrypted data based the second string of symbols to form decrypted data.

10. A method for the retrieval of stored encrypted data including the steps of:
retrieving stored encrypted data from a non-volatile memory;
generating a first string of symbols;
generating a second string of symbols in user access unit based on the first string of symbols; and
decrypting the encrypted data utilizing the second string of symbols to form decrypted data.

11. A method according to claim 9 or claim 10 wherein the step of decrypting includes the step of generating a string of words from the second string of symbols and decrypting the encrypted data with the string of words.

12. Apparatus for secure storage of data comprising:
a terminal;
a security access port operatively associated with the terminal adapted to receive a user access unit;
seed generating means for generating a first string of symbols;
word generating means for generating a second string of symbols in the user access unit based on the first string of symbols;
encrypting means for encrypting the data based on the second string of symbols to form an encrypted data block;
a non-volatile memory; and
storage means for storing the encrypted data block in the non-volatile memory.

13. Apparatus according to claim 12 wherein the seed generating means includes means for deriving the first string of symbols from the address of the encrypted data block in the non-volatile memory.

14. Apparatus according to claim 12 wherein the seed generating means includes an essentially random symbol generator, wherein the first string of symbols is derived from the output of the essentially random symbol generator.

15. Apparatus according to any of claims 12-14 and including means for storing the first string of symbols together with the encrypted data.

16. Apparatus according to any of claims 12-15 wherein the encrypting means includes means for generating a string of words from the second string of symbols and for encrypting the data with the string of words.

17. Apparatus according to claim 16 wherein the means for generating includes a pseudo-random binary number generator.

18. Apparatus according to any of claims 12-17 and including:
retrieving means for retrieving the stored encrypted data from the non-volatile memory;
regenerating means for re-generating the first string of symbols;
means for applying the first string of symbols to the word generating means and for receiving therefrom a regenerated second string of symbols; and
decrypting means for decrypting the encrypted data based on the second string of symbols to form decrypted data.

19. A computer system comprising:
a terminal;
a security access port operatively associated with the terminal adapted to receive a user access unit;
a non-volatile memory containing stored encrypted data;
means for retrieving the stored encrypted data from the non-volatile memory;
seed generating means for generating a first string of symbols;
word generating means for generating a second string of symbols in the user access unit based on the first string of symbols; and
means for decrypting the encrypted data based on the second string of symbols to form decrypted data.

20. Apparatus according to claim 19 wherein the means for decrypting includes means for generating a string of words from the second string of symbols and for decrypting the encrypted data with the string of words.

21. Apparatus according to claim 20 wherein the means for generating includes a pseudo-random binary number generator.
